# EUROPEAN PATENT SPECIFICATION

(11) **EP 2 511 915 B1**
(45) Date of publication and mention of the grant of the patent: **06.07.2016**
(21) Application number: 11166070.0
(22) Date of filing: 13.05.2011
(51) Int. Cl.: H02H 3/04, H01C 7/12, H01H 37/76

(54) **Electric device**
Elektrisches Gerät
Dispositif électrique

(30) Priority: 13.04.2011 EP 11162285
(43) Date of publication of application: 17.10.2012
(73) Proprietor: EPCOS AG, 81669 München (DE)
(72) Inventor: Qin, Jifeng, Zhuhai Guangdong 519030 (CN); Song, Dongjian, Zhuhai Guangdong 519030 (CN); Sun, Shaoyu, Zhuhai Guangdong 519030 (CN)
(74) Representative: Epping - Hermann - Fischer

(56) References cited:
- DE-A1- 3 643 622
- GB-A- 2 345 187
- US-A1- 2008 258 858
- US-B1- 6 323 750

## Description

The invention concerns an electric device comprising an electric element.

An electric device, e.g. a standard metal oxide varistor, may catch fire under abnormal overvoltage conditions. There are thermal fuse varistors, e.g. based on ZnO varistors, comprising complicated thermal fuse structures. Such thermally protected metal oxide varistors may be used in surge protected devices.

US 2008/0258858 shows a non-burnable varistor connected to a elastic metal by soldering. GB 2345187 shows a varistor and a fuse contained in a housing. US 6323750 and DE 3643622 also show electrical components with safety release.

It is an aim of the invention to provide an alternative device which prevents fire under abnormal overvoltage conditions.

This aim may be achieved by an electric device according to claim 1, the electric device comprising: an electric element having a body and a terminal, a conductive spring being deflected, and a housing. The spring is electrically connected to the terminal by a fusible joint, where the spring and the terminal are electrically disconnected if the joint fuses. The terminal is bent so that it runs adjacent to the front or the back of the body. The spring is fixed to the housing so that the spring is deflected. A part of the spring that is connected to the terminal will move away from the terminal when the joint fuses.

This arrangement is compact. A driving potential for the element can be applied to the terminal via the spring. The driving potential is no longer applied to the element if the connection between the terminal and the spring is electrically disconnected. When there are abnormal overvoltage conditions which may torch the element the failure safe device gets to an open-circuited state which interrupts current flow and prevents the electric device from catching fire.

The conductive spring serves as a conductor and as a moveable element having a spring function which enables the tearing apart of the terminal and the spring after melting of the joint due to temperature rise caused by abnormal voltage conditions. The device has a high reliability under abnormal overvoltage conditions. Moreover, the device has a simple structure and can be assembled in an easy way.

The movement of the spring causes a gap between the terminal and the spring, the gap extinguishing sparks. Thus, the device can be used also in DC applications.

The electric element may be a basic electric element available in discrete form. The term electric element shall include electronic elements. Moreover electric elements shall include electronic circuits which may be integrated, and active and passive elements. Such elements may have two or more terminals or leads which are connected with the body. The device which comprises the element may be a component having electrodes for connecting and driving the component.

The body of the element may have a front, a back and sides. The spring is located adjacent to the front or the back. Alternatively, the spring is located adjacent to one of the sides.

The spring may have an arbitrary form which enables elastic deformation of the spring. In one embodiment the spring has an S shape. The spring may be a flat spring or a wire spring. In one embodiment the spring has an end section that is connected with the terminal by the joint, the end section being formed as a bend. The end section may be formed so that a part of the end section abuts another part of the end section. The bend enables easy soldering of the end section with the terminal. The solder may have a low melting point temperature, where the melting temperature is lower than the melting temperature of other solder connections of the device.

In one embodiment the electric element is a varistor, so that the device serves as a thermal fuse varistor with abnormal overvoltage protection which enables safe operation due to open circuit failure mode. The separation of the terminal and the spring in the open circuit failure mode may prevent the device from catching fire. The device may be a metal oxide varistor device.

In one embodiment the housing comprises a wall, preferably an inner wall of the housing. The element is arranged on one side of the wall and the spring is arranged on the other side of the wall. The housing and the wall may be made of plastic. The wall separates the spring and the element. If the joint fuses, the wall prevents a solder bridge between the terminal and the spring after separation.

In one embodiment the terminal is arranged between the wall and the front or the back of the body. Alternatively the terminal is arranged between the wall and one of the sides of the body.

The wall may have a cut-out. The joint is placed in the cut-out or adjacent to the cut-out. The cut-off may be formed as slot or hole, for example.

The device may comprise a further terminal. The driving voltage can be applied between the further terminal and the spring. The terminal serves as a monitor terminal for detecting whether the terminal and the spring are electrically connected. A signal component may be placed between the terminal and the further terminal of the element. The signal element, e.g. a LED, and the device may be placed on a customer circuit board. Thus, the terminal can be used for monitoring purposes to check whether the thermal fuse is open or not inside the housing.

Further features, refinements and expediencies become apparent from the following description of the exemplary embodiments in connection with the figures.
Figure 1 shows an embodiment of the electric element.
Figures 2 and 3 show the inside of an embodiment of the device.
Figures 4A, 4B and 4C show an embodiment of the element.
Figures 5A, 5B and 5C show another embodiment of the device.
Figures 6A and 6B show an embodiment of the spring.
Figure 7 show a further embodiment of the spring.
Figures 8, 9A and 9B show the inside of a further embodiment of the device.
Figures 10A, 10B and 10C show an embodiment of the element.
Figure 11 shows a circuit diagram of a typical application of the device.

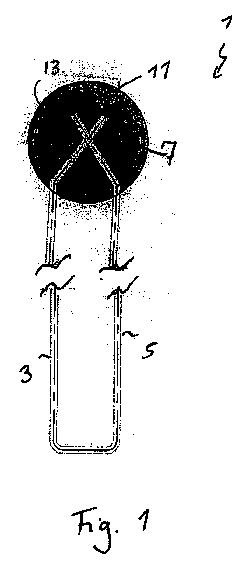

Figure 1 schematically shows an electric element 1, e.g. a varistor. The element comprises a body 13 having a front 7, a back 9 and sides 11. A first terminal 3 and a second terminal 5 are provided for applying driving potentials to the element 1. The terminals 3, 5 are soldered on metallization layers of the body. The terminals 3, 5 may be basic wire leads for a standard element, e.g. a standard varistor.

The terminals 3, 5 may be formed by a single wire, so that they and the body 13 are short-circuited. The wire could be separated in two parts (not shown in figure 1) before use of the element 1.

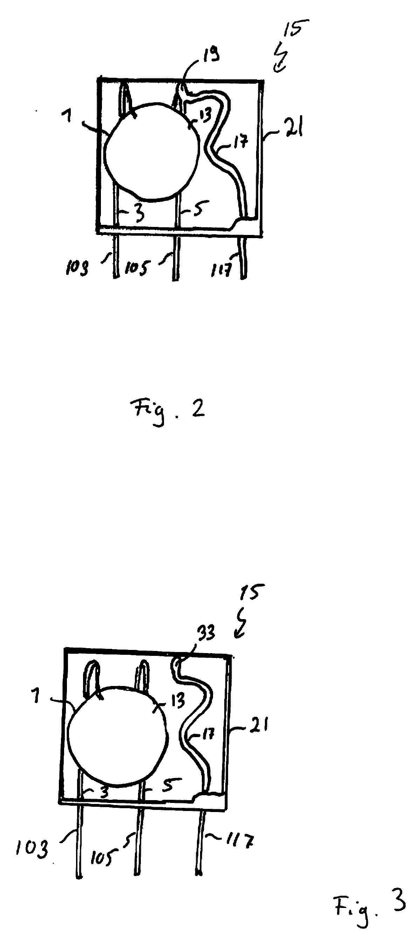

Figure 2 shows an embodiment of a device 15 which comprises an electric element 1, which may be a standard component, e.g. a metal oxide varistor, having a first terminal 3 and a second terminal 5. The terminals 3, 5, as two linear wire leads of a standard element, e.g. a varistor, are reshaped in order to have a suitable shape for soldering and assembly. The terminals 3, 5 are bent so that they run along the back 9 of the body 13. A conductive spring 17 is connected with the second terminal 5 by means of a fusible joint 19. Alternatively a connection means (not shown), e.g. an inner electrode, may be provided which is electrically connected with the spring 17 and the second terminal 5, thereby forming the electrical connection between the spring 17 and the second terminal 5. At least one of these connections may be formed by means of a fusible joint 19.

The spring 17 has a spring function and serves as a conductive lead. The spring 17 has an S shape. Bronze (ISO type CuSn6) with tin or nickel plating can be used as material for the spring 17. It can be easy soldered on a printed circuit board and has good electric conductivity and elasticity. This enables transition of high electric current during normal use and forms an open circuit under abnormal overvoltage conditions with high action speed and high reliability. However other materials may be additionally or alternatively used.

The spring 17 can be formed as a wire spring or flat spring. The transverse section may be round or rectangle. However, other forms of the spring are also possible which have a similar function, so that the spring can be disconnected from the second terminal 5 due to elasticity. Two or more springs 17 can be soldered with the second terminal 5 in parallel to protect more elements 1.

The fusible joint 19 may be a solder joint where the solder has a low melting point temperature. In other words, the second terminal 5 is soldered with spring 17 using thermal fuse material with a low melting point temperature. The joint 19 acts as a solder joint between the spring 17 and the element 1. A solder with a low melting point temperature of 138°C, that may contain Sn 42% and Bi 58%, is suitable for acting as a thermal fuse. Such solder melts beyond 138°C enabling to release the spring 17 which causes an open circuit. Other materials having high electric conductivity and a low melting point temperature are also suitable.

A solder with a high melting point temperature of more than 180°C, e.g. a solder including Sn 97.8 %, Ag 2.0% and Cu 0.2%, may be used for the connections between the terminals 3, 5 and the metallization layers of the body 13. The higher melting point temperature ensures that these connections do not melt before the fusible joint 19 melts.

The device 15 further comprises a housing having a bottom housing cover 21 and a top housing cover (not shown). An inner wall (not shown in Figure 2) may be provided between the element 1 and the spring 17, the inner wall having a cut-off which enables the connection between the element 1 and the spring 17.

It should be mentioned that figure 2 shows a top view onto the bottom housing cover 21. The element 1 and the spring 17 can be covered by the upper housing cover (not shown). A plastic with high isolation strength which serves as flame retardant may be used as housing material. A high heat deformation temperature (more than 200°C) of such material ensures the support of the spring 17 and the element 1 under abnormal overvoltage conditions. PBT (mixed with glass fibre) or PPS may be suitable materials for the housing.

After soldering and assembly into a bottom housing cover 21, the upper housing cover (not shown) is used for final enclosure. The element 1 and the spring 17 are arranged inside the housing. Parts 103, 105, 117 of the terminals 3, 5 and the spring 17 are outside the housing, these parts 103, 105, 117 can be contacted and serve as electrodes for applying potentials. The electrodes 103, 105, 117 are arranged in a row.

The element 1 is driven by applying a driving voltage between the first terminal 3 and the spring 17. If the driving voltage exceeds a given value, the fusible joint 19 melts due to temperature increase, which causes an open circuit.

The terminals 3, 5 and the spring 17 run through holes in the housing. The element 1 and the spring 17 may be fixed by means of friction between the terminals 3, 5 and the housing or between the spring 17 and the housing or by an adhesive means (not shown). The spring 17 is fixed to the housing and connected with the second terminal 5, so that the spring 17 is deflected. When the fusible joint 19 melts, the part of the spring 17 that is connected with the second terminal 5 will move away from the second terminal 5, thereby electrically disconnecting the second terminal 5 and the spring 17.

The temperature of the element 1, e.g. a metal oxide varistor, increases under abnormal overvoltage conditions. When abnormal overvoltage is applied between the first terminal 3 and the spring 17 which is coupled with the joint 19 serving a thermal fuse, the temperature increases so that the joint 19 having a low melting point temperature melts and forms an open circuit with the help of the spring's elasticity. Thus, the electric current between the first terminal 3 and the spring 17 will be cut off and no overvoltage is applied to the element 1 anymore, which prevents the element 1 from catching fire.

Figure 3 shows the device 15 of figure 2 after application of an overvoltage between the first terminal 3 and the spring 17. The joint 19 has melted thereby disconnecting the second terminal 5 and the spring 17, an end section 33 of the spring 17 that has been connected to the second terminal 5, having moved away from the second terminal 5 due to the elasticity of the spring 17.

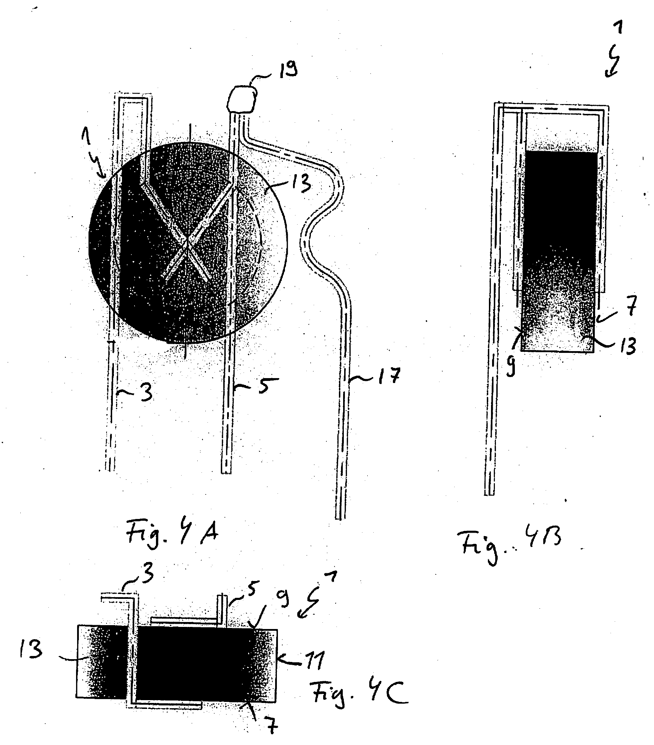

Figure 4A show a front view of the element 1 having bent terminals 3, 5 and the spring 17. Figure 4B shows the side view of the element 1. Figure 4C shows the top view of the element 1.

The first terminal 3 is bent over the side 11 of the body 13 so that the first terminal 3 runs adjacent to the back 9 of the body 13. The second terminal 5 is bent so that it also runs adjacent to the back 9. The first and second terminals 3, 5 are bent so that they have rectangular or nearly rectangular angles. The first and second terminals 3, 5 run along the back in parallel or nearly in parallel to each other and to the back 9.

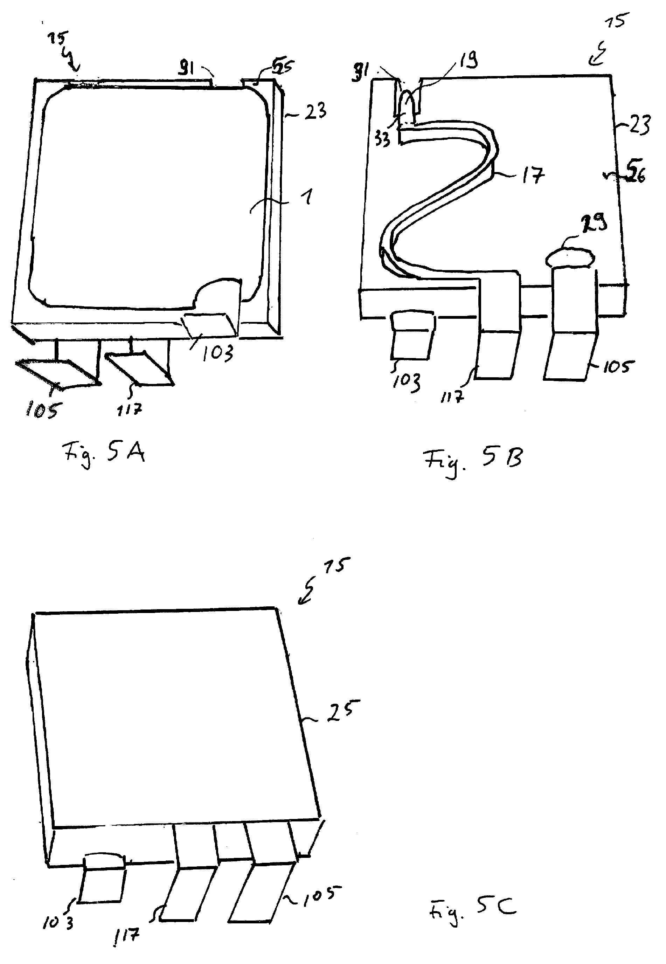

Figure 5 A shows a front view of the inside of a further embodiment of a device 15 which comprises a housing having an inner wall 23. Figure 5B shows the back view of the inside of the embodiment.

The inner wall 23 has a first side 55 and an opposite second side 56. The element 1 is arranged adjacent to the first side 55 of the inner wall 23. The spring 17 is arranged adjacent to the second side 56. A cut-off 31 in the inner wall 23 enables a connection between the end section 33 of the spring 19 and the second terminal 5 by means of the fusible joint 19. In this embodiment the spring 17 is formed as a flat spring. A first, second and third electrode 103, 105 117 are provided. The first and second electrodes 103, 105 are connected with the first and second terminals 3, 5, respectively, e.g. by means of solder 29. Alternatively the terminals 3, 5 have end sections which are located outside the housing, the end sections being formed as electrodes 103, 105. The third electrode 117 is another end section of the spring 17.

The element 1 and the spring 17 are covered by top and bottom housing covers 25, 21, as shown in figure 5C, which shows the front view of the device 15 with the top housing cover 25.

If an overvoltage is applied between the first electrode 103 and the third electrode 117, the fusible joint 19 melts, thereby electrically disconnecting the second terminal 5 and the spring 17, so that the end section 33 of the spring 17 moves away from the cut-off 31 and the second terminal 5.

The inner wall 23 between the spring 17 and the element 1 serves as separating means. In comparison with the embodiment mentioned before, there may more space for the spring action enabling a greater distance between the end section 33 of the relaxed spring 17 and the second terminal 5, which can prevent a melted solder bridge between these parts and greatly increase reliability under abnormal overvoltage condition.

A flat spring 17 as shown in figure 5B has a big cross section for the electric current which can withstand a high current, e.g. up to 40kA or more in 8/20µs surge testing.

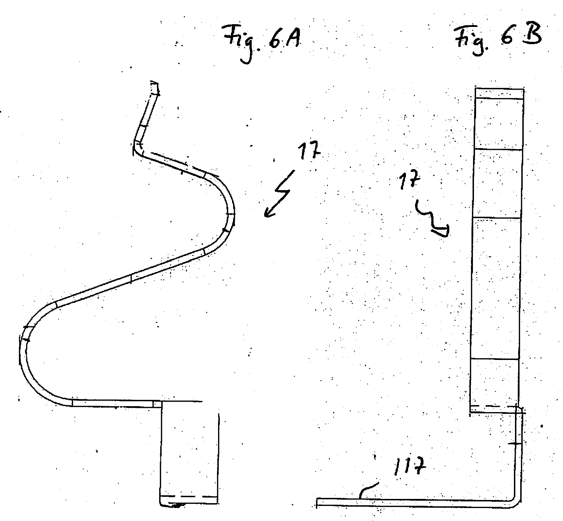

Figures 6A and 6B show a detailed front view of the flat spring 17 in figure 5B and a detailed side view of the spring 17, respectively.

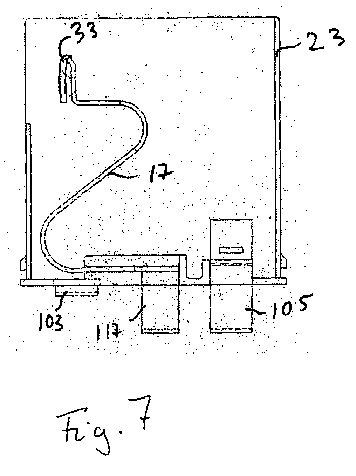

Figure 7 shows another embodiment of a flat spring 17 arranged on the inner wall 23 of a housing. The end section 33 of flat spring 17 is bent so that the gap between the end section 33 of flat spring 17 and the second terminal 5 is increased and constant, with this means, solder quantity is increased and controlled. An eye may be formed. The bend causes that more solder can be attached to the end section 33 so that more solder can be filled between two soldering interfaces of the spring 17 and the second terminal 5 which may prevent premature thermal fuse disconnection during normal use.

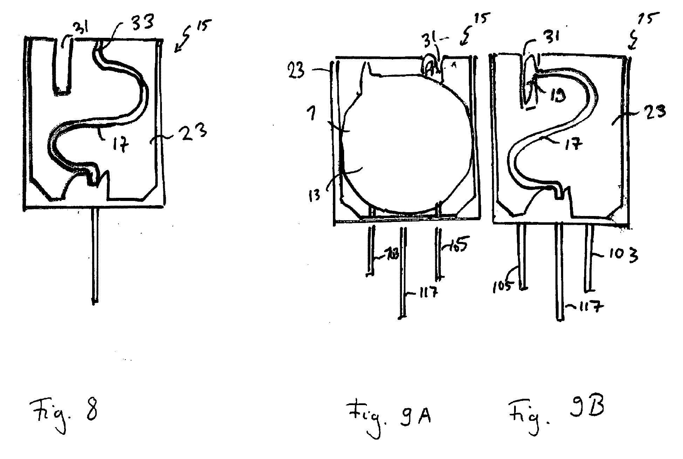

Figures 8 and 9A and 9B show a further embodiment of a device 15 having an inner wall 23. Figure 9 shows the relaxed spring 17 having a section which runs through a hole in the housing so that a part of the spring 17 is outside the housing, the section serving as an offset lead.

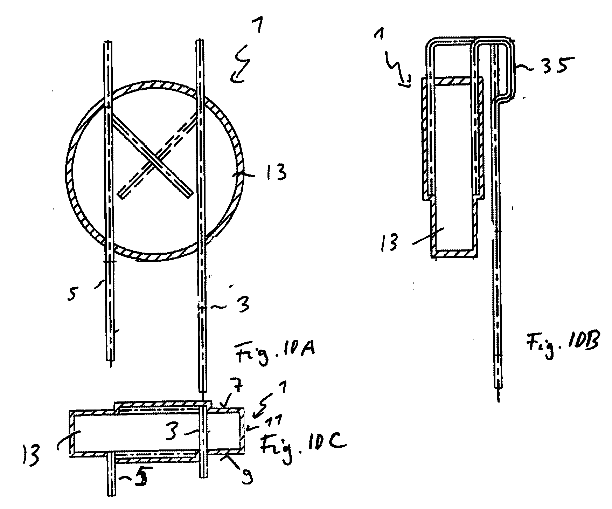

Figure 9A shows a front view of the inside of the embodiment where the body 13 of the element 1 is arranged on one side of the inner wall 23. The terminals 3 and 5 are located between the back 9 of the body 13 and the inner wall 23. Figure 9B shows the spring 17 located on the other side of the inner wall 23, the spring 17 being connected with the second terminal 5 where the joint 19 is located in the cut-off 31 of the inner wall 23. It should the mentioned that the element 1 and the spring 17 are covered by top and bottom housing covers (not shown in figures 9, 10A and 10B).

Figure 10A show a front view of the element 1 in figure 9A, the element 1 having bent terminals 3, 5. Figure 10B shows the side view of the element 1. Figure 10C shows the top view of the element 1.

The first terminal 3 is bent over the side 11 of the body 13 so that it runs adjacent to the back 9. The second terminal 5 is bent so that it runs also adjacent to the back 9. The first and second terminals 3, 5 are bent so that they have rectangular or nearly rectangular angles. The first and second terminals 3, 5 run along the back 9 in parallel or nearly in parallel to each other and to the back 9. The second terminal 5 is bent so that there is a nose 35 located adjacent to the edge of the back 9. The nose 35 protrudes from the plane in which the terminals 3, 5 run. The nose 35 can be inserted into the cut-off 31 in order to be connected with the end section 33 of the spring 17.

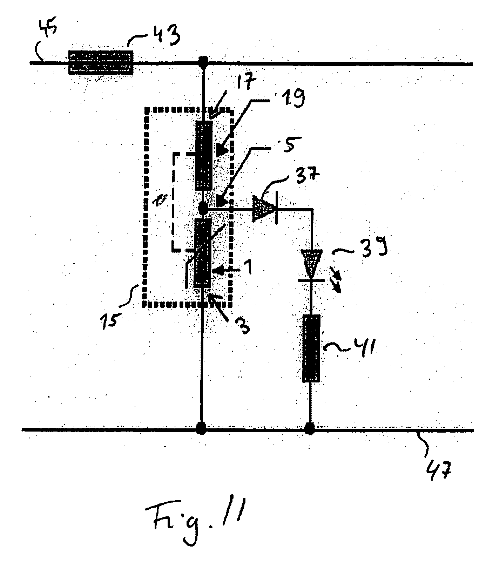

Figure 11 shows a circuit diagram of a typical application of the device 15. The device 15 comprises the joint 19 serving as a thermal fuse element and the element 1 which is a varistor having the first and second terminals 3, 5. The device15 is coupled between a line 45 and neutral potential 47, the line 45 having a line fuse 43 that is connected with the spring 17. A driving voltage for driving the device 15 may be applied between the line 45 and the neutral potential 47. The spring 17, the joint 19 serving as a terminal fuse element and the element 1 are coupled in series between the line 45 and neutral potential 47, so that the first terminal 3 is connected with the neutral potential 47.

A series connection of a diode 37, an LED 39 and a resistor 41 is coupled between the second terminal 5 and the first terminal 3. This series connection serves as a signal arrangement suitable for indicating whether the thermal fuse has disconnected the spring from the second terminal 5.

It is mentioned that the features of the embodiments of the invention according to the appended claims and mentioned in the specification can be combined.

### Reference numerals

- 1: element
- 3, 5: terminals
- 7: front
- 9: back
- 11: side
- 13: body
- 15: device
- 17: spring
- 19: fusible joint
- 21: bottom housing cover
- 23: wall
- 25: top housing cover
- 29: solder
- 31: cut-out
- 33: end section
- 35: nose
- 37: diode
- 39: LED
- 43: line fuse
- 41: resistor
- 45: line
- 47: neutral potential
- 55, 56: sides
- 103, 105, 117: electrodes

## Claims

1. An electric device (15) comprising:
an electric element (1) comprising a body (13), which has a front (7) and a back (9), and a terminal (5),
a conductive spring (17) being deflected, the spring (17) being electrically connected to the terminal (5) by a fusible joint (19), where the spring (17) and the terminal (5) are electrically disconnected if the joint (19) fuses, and
a housing (21, 23)
**characterised in that**
the terminal (5) is bent so that it runs adjacent to the front (7) or the back (9), and
wherein the spring (17) is fixed to the housing (21, 23) so that the spring (17) is deflected and wherein a part of the spring (17) that is connected to the terminal (5) will move away from the terminal (5) when the joint (19) fuses.

2. The device (15) according to claim 1 where the body (13) has sides (11), the spring (17) being located adjacent to the front (7) or the back (9), or the spring (17) being located adjacent to one of the sides (11).

3. The device (15) according to any of the claims 1 to 2 where the spring (17) has an S shape.

4. The device (15) according to any of the claims 1 to 3 where the spring (17) is a flat spring or a wire spring.

5. The device (15) according to any of the claims 1 to 4 where the spring (17) has an end section (33) that is connected with the terminal (5) by the joint (19), the end section (33) being formed as a bend.

6. The device (15) according to any of the claims 1 to 5 where the fusible joint (19) comprises solder having a low melting point temperature.

7. The device (15) according to any of the claims 1 to 6 where the electric element (1) is a varistor.

8. The device (15) according to any of the claims 1 to 7 where the housing (21, 23, 25) comprises a wall (23) and where the element (1) is arranged on one side (55) of the wall (23) and the spring (17) is arranged on the other side (56) of the wall (23).

9. The device (17) according to any of the claims 1 to 8 where the terminal (5) is arranged between the wall (23) and the front (7) or the back (9) of the body (13) or where the terminal (5) is arranged between the wall (23) and one of the sides (11) of the body (13).

10. The device (17) according to any of the claims 8 to 9 where the wall (23) has a cut-out (31), the joint (19) being placed in the cut-out (31) or adjacent to the cut-out (31).

11. The device (17) according to any of the previous claims where the element (1) comprises a further terminal (3), a driving voltage can be applied between the further terminal (3) and the spring (17), the terminal (5) serving as a monitor terminal for detecting whether the terminal (5) and the spring (17) are electrically connected.

## Patentansprüche

1. Elektrische Vorrichtung (15), umfassend:
ein elektrisches Element (1), das einen Körper (13), der eine Vorderseite (7) und eine Rückseite (9) aufweist, und einen Anschluss (5) aufweist, eine leitfähige Feder (17), die ausgelenkt ist, wobei die Feder (17) durch eine Schmelzverbindung (19) mit dem Anschluss (5) elektrisch verbunden ist, wobei die Feder (17) und der Anschluss (5) elektrisch getrennt werden, wenn die Verbindung (19) schmilzt, und ein Gehäuse (21, 23)
**dadurch gekennzeichnet, dass**
der Anschluss (5) so gebogen ist, dass er benachbart zur Vorderseite (7) oder zur Rückseite (9) verläuft, und
wobei die Feder (17) am Gehäuse (21, 23) befestigt ist, so dass die Feder (17) ausgelenkt wird, und wobei ein Teil der Feder (17), der mit dem Anschluss (5) verbunden ist, sich vom Anschluss (5) weg bewegen wird, wenn die Verbindung (19) schmilzt.

2. Vorrichtung (15) nach Anspruch 1, wobei der Körper (13) Seiten (11) aufweist, wobei die Feder (17) benachbart zur Vorderseite (7) oder zur Rückseite (9) angeordnet ist oder die Feder (17) benachbart zu einer der Seiten (11) angeordnet ist.

3. Vorrichtung (15) nach einem der Ansprüche 1 bis 2, wobei die Feder (17) eine S-Form aufweist.

4. Vorrichtung (15) nach einem der Ansprüche 1 bis 3, wobei die Feder (17) eine Blattfeder oder eine Drahtfeder ist.

5. Vorrichtung (15) nach einem der Ansprüche 1 bis 4, wobei die Feder (17) einen Endabschnitt (33) aufweist, der durch die Verbindung (19) mit dem Anschluss (5) verbunden ist, wobei der Endabschnitt (33) als ein Bogen ausgebildet ist.

6. Vorrichtung (15) nach einem der Ansprüche 1 bis 5, wobei die Schmelzverbindung (19) ein Lötmetall aufweist, das eine niedrige Schmelzpunkttemperatur aufweist.

7. Vorrichtung (15) nach einem der Ansprüche 1 bis 6, wobei das elektrische Element (1) ein Varistor ist.

8. Vorrichtung (15) nach einem der Ansprüche 1 bis 7, wobei das Gehäuse (21, 23, 25) eine Wand (23) aufweist und wobei das Element (1) auf einer Seite (55) der Wand (23) angeordnet ist und die Feder (17) auf der anderen Seite (56) der Wand (23) angeordnet ist.

9. Vorrichtung (17) nach einem der Ansprüche 1 bis 8, wobei der Anschluss (5) zwischen der Wand (23) und der Vorderseite (7) oder der Rückseite (9) des Körpers (13) angeordnet ist oder wobei der Anschluss (5) zwischen der Wand (23) und einer der Seiten (11) des Körpers (13) angeordnet ist.

10. Vorrichtung (17) nach einem der Ansprüche 8 bis 9, wobei die Wand (23) einen Ausschnitt (31) aufweist, wobei die Verbindung (19) im Ausschnitt (31) oder benachbart zum Ausschnitt (31) angeordnet ist.

11. Vorrichtung (17) nach einem der vorhergehenden Ansprüche, wobei das Element (1) einen weiteren Anschluss (3) aufweist und eine Steuerspannung zwischen dem weiteren Anschluss (3) und der Feder (17) angelegt werden kann, wobei der Anschluss (5) als ein Überwachungsanschluss zum Ermitteln dient, ob der Anschluss (5) und die Feder (17) elektrisch verbunden sind.

## Revendications

1. Composant électrique (15) comprenant :
un élément électrique (1) comprenant un corps (13) qui comporte une partie avant (7) et une partie arrière (9), et une borne (5),
un ressort conducteur (17) étant fléchi, le ressort (17) est relié électriquement à la borne (5) par un joint fusible (19), le ressort (17) et la borne (5) étant électriquement déconnectés si le joint (19) fond, et
un boîtier (21, 23)
**caractérisé en ce que**
la borne (5) est pliée de façon à courir de manière adjacente à la partie avant (7) ou à la partie arrière (9), et
dans lequel le ressort (17) est fixé au boîtier (21, 23) de telle sorte que le ressort (17) soit fléchi, et où une pièce du ressort (17) qui est reliée à la borne (5) s'éloignera de la borne (5) à la fusion du joint (19).

2. Composant (15) selon la revendication 1, où le corps (13) possède des flancs (11), le ressort (17) étant situé pour être adjacent à la partie avant (7) ou à la partie arrière (9), ou bien le ressort (17) étant situé de manière adjacente à l'un des flancs (11).

3. Composant (15) selon l'une quelconque des revendications 1 et 2, où le ressort (17) présente une forme de S.

4. Composant (15) selon l'une quelconque des revendications 1 à 3, où le ressort (17) est un ressort plat ou un ressort de fil.

5. Composant (15) selon l'une quelconque des revendications 1 à 4, où le ressort (17) comporte une section terminale (33) qui est reliée à la borne (5) par le joint (19), la section terminale (33) étant formée comme une partie coudée.

6. Composant (15) selon l'une quelconque des revendications 1 à 5, où le joint fusible (19) comprend une soudure présentant une basse température de fusion.

7. Composant (15) selon l'une quelconque des revendications 1 à 6, où l'élément électrique (1) est une varistance.

8. Composant (15) selon l'une quelconque des revendications 1 à 7, où le boîtier (21, 23, 25) comprend une paroi (23) et où l'élément (1) est agencé sur un côté (55) de la paroi (23), et le ressort (17) est agencé sur l'autre côté (56) de la paroi (23).

9. Composant (17) selon l'une quelconque des revendications 1 à 8, où la borne (5) est agencée entre la paroi (23) et la partie avant (7) ou la partie arrière (9) du corps (13) ou bien où la borne (5) est agencée entre la paroi (23) et l'un des côtés (11) du corps (13).

10. Composant (17) selon l'une quelconque des revendications 8 et 9, où la paroi (23) comporte une découpe (31), le joint (19) étant placé dans la découpe (31) ou bien adjacent à la découpe (31).

11. Composant (17) selon l'une quelconque des revendications précédentes, où l'élément (1) comprend une autre borne (3), une tension d'attaque pouvant être appliquée entre l'autre borne (3) et le ressort (17), la borne (5) servant de borne de surveillance afin de détecter si la borne (5) et le ressort (17) sont reliés électriquement.
